## Europäisches Patentamt

## European Patent Office

## Office européen des brevets

(19)

(11) Veröffentlichungsnummer : **0 329 930 B1**

(12) **EUROPÄISCHE PATENTSCHRIFT**

(45) Veröffentlichungstag der Patentschrift :
**25.03.92 Patentblatt 92/13**

(51) Int. Cl.$^5$ : **C03B 5/26**

(21) Anmeldenummer : **89100366.7**

(22) Anmeldetag : **11.01.89**

(54) **Bodenauslauf eines Glasschmelzofens.**

(30) Priorität : **08.02.88 DE 3803730**

(43) Veröffentlichungstag der Anmeldung :
**30.08.89 Patentblatt 89/35**

(45) Bekanntmachung des Hinweises auf die
Patenterteilung :
**25.03.92 Patentblatt 92/13**

(84) Benannte Vertragsstaaten :
**AT BE CH DE ES FR GB IT LI NL SE**

(56) Entgegenhaltungen :
**DD-B- 206 136**
**DE-A- 2 017 096**
**DE-A- 2 849 166**
**DE-B- 2 842 505**

(73) Patentinhaber : **Beteiligungen Sorg GmbH &
Co. KG
Stoltestr. 23
W-8770 Lohr/Main (DE)**

(72) Erfinder : **Krejci, Heinrich
An der Hafnergrube 2
W-8772 Marktheidenfeld (DE)**
Erfinder : **Kessel, Rudi
Bergwiesenstrasse 1
W-8770 Lohr/Main (DE)**

(74) Vertreter : **Schulze Horn, Stefan, Dipl.-Ing.
M.Sc. et al
Goldstrasse 36
W-4400 Münster (DE)**

## Beschreibung

Die Erfindung betrifft einen diskontinuierlich betreibbaren Bodenauslauf eines Glasschmelzofens, mit einem Auslaufstein mit einer Auslaufbohrung, in welcher das Glas während des nicht in Funktion befindlichen Auslaufs eingefroren ist und den Auslauf abdichtet, wobei eine unterhalb der Auslaufbohrung gegen den Auslaufstein gepreßte Auslaufdüse als Elektrode zu einer im Glasbad befindlichen Gegenelektrode geschaltet ist.

Bodenausläufe bei Glasschmelzöfen dienen dazu, entweder eine Entleerung des Ofens nach Ende einer "Ofenreise" zu ermöglichen, verunreinigte Glasmengen abzuziehen, die sich im Bodenbereich angesammelt haben oder regelmäßig gewisse Glasmengen aus dem Bodenbereich abzuziehen, falls ein Speiserbetrieb nicht möglich oder erwünscht ist.

Bodenauslässe für Glasschmelzöfen weisen im allgemeinen den Nachteil auf, daß sie entweder nur schwer wieder verschließbar sind oder daß ihre Funktion, insbesondere nach längeren, manchmal jahrelangen Pausen nicht mehr sichergestellt ist. Zudem sind sie aufwendig und können ein Sicherheitsrisiko im Ofenbetrieb bilden, falls sie unkontrolliert und ungewollt öffnen.

Ein Bodenauslaß, der in dem Oberbegriff des Anspruches 1 beschrieben wird, ist aus der DE-A1-2 849 166 bekannt, bei welchem das Ausfließen des Glases auch durch Einfrieren von Glas innerhalb eines Auslaufsteines erfolgt. Nachteilig ist bei diesem Auslauf aber, daß eine Regelmöglichkeit nicht vorhanden ist, d.h. ein konstanter Ausfluß kann nicht eingestellt werden und daß der Aufwand für die Herstellung des Auslasses hoch ist.

Es ist daher Aufgabe der Erfindung, einen Bodenauslaß für Glasschmelzöfen zu finden, bei welchem sichergestellt ist, daß ein ungewolltes Öffnen ausgeschlossen werden kann, daß aber andererseits auch nach längerer Betriebspause die Funktion des Auslasses auch derart sichergestellt ist, daß die Auslaßmenge geregelt werden kann.

Der erfindungsgemäße Auslaß soll darüberhinaus auch im langjährigen, regelmäßigen Betrieb im Wechsel zwischen Funktion und Abschluß funktionieren, einfach aufgebaut und wirtschaftlich herstellbar sein und auch den Betrieb durch Nicht-Fachpersonal ermöglichen.

Diese Aufgabe wird erfindungsgemäß dadurch gelöst, daß bei einem eingangs genannten Bodenauslauf die Auslaufdüse aus hoch hitzebeständigem und nicht oxidierendem Metall besteht und daß eine bewegliche Isolierung für den unterhalb der Auslaufdüse befindlichen Auslaufraum vorhanden ist.

Weitere vorteilhafte Ausgestaltungen des erfindungsgemäßen Auslasses werden in den Unteransprüchen 2 bis 6 näher beschrieben.

Das Verfahren zum Betreiben des erfindungsgemäßen Bodenauslasses kennzeichnet sich vorteilhaft dadurch, daß zur Inbetriebnahme des Auslaufs eine Isolierung des Auslaufraumes vorgenommen wird, nach Erreichen einer ausreichenden Temperatur an der Auslaufdüse ein Stromfluß zwischen der Auslaufdüse und der Gegenelektrode hergestellt und die Isolierung entfernt wird, wobei bei weiterer Aufheizung der Glasfluß einsetzt und zur Beendigung der Glasentnahme die Zuführung elektrischer Energie unterbrochen wird, wonach das Glas im Auslaufstein wieder erstarrt.

Eine Einstellung eines genau definierten Glasstromes und damit die Entnahme einer genau bestimmten Glasmenge ist erfindungsgemäß dadurch möglich, daß der Glasstrom während des Betriebes des Auslaufs über eine Regelung der zugeführten elektrischen Energie in Abhängigkeit von der Temperatur an der Auslaufdüse konstant gehalten wird.

Ersichtlicherweise wird die erfindungsgemäße Aufgabe mit einfachen Mitteln und damit zuverlässig gelöst und es kann daher von einer idealen Lösung der anstehenden Probleme gesprochen werden.

Im weiteren wird ein Ausführungsbeispiel der Erfindung anhand einer Zeichnung näher erläutert, die einen Schnitt durch den Bodenauslaß zeigt.

Der diskontinuierlich betreibbare Bodenauslauf gemäß der Erfindung wird in einen wie üblich aufgebauten Boden eines Glasschmelzofens eingebaut und ermöglicht es, aus diesem bei Bedarf Glas abzuziehen bzw. über diesen den Ofen zu entleeren. Der Glasabzug kann in regelmäßigen oder unregelmäßigen Abständen erfolgen, wobei auch die gesamte Glasentnahme im laufenden Betrieb über den erfindungsgemäßen Bodenauslauf erfolgen kann.

Der Bodenauslauf besteht aus einem Auslaufstein 1, unter welchem eine Auslaufdüse 3 angeordnet ist. Der Auslaufstein 1 weist eine Mittelbohrung 2 auf, deren Achse mit einer Bohrung 5 in der Auslaufdüse fluchtet.

Die Auslaufdüse 3 wird von einem Stützzylinder 6 über ein Joch 7 desselben gehalten, wobei auch das Joch 7 zylindrisch ist und eine Ausnehmung aufweist, in die die Auslaufdüse 3 einlegbar ist. Die Tiefe der Ausnehmung ist dabei geringer als die Höhe der Auslaufdüse 3, so daß diese über den Stützzylinder 6 gegen den Auslaufstein 1 anpreßbar ist.

Diese Anpressung ermöglicht einen Stromfluß von der Düse 3 nicht nur durch das in der Auslaufbohrung 2 befindliche Glas, sondern auch durch den Auslaufstein 1 selbst, wenn eine ausreichende Temperatur dieser Teile gegeben ist. Eine ausreichende Temperatur besteht bereits bei ca. 700° C.

Der Innendurchmesser des Stützzylinders 6 ist wesentlich größer als der des Jochs 7, wobei dessen Durchmesser wiederum ganz erheblich größer ist als der Durchmesser der Bohrung 5 in der Auslaufdüse 3. Die maximale Auslaufmenge wird also von dem Durchmesser der Bohrung 5 bestimmt, wobei auch in diesem Bereich das Einfrieren bei Abschaltung des Auslaufs beginnt.

Der Stützzylinder 6 wird von einer Halterung 8 aus Metall getragen, die sich wiederum federnd auf der Stahlverankerung 9 des Ofens abstützt. Durch die Federung wird sichergestellt, daß eine ausreichende Anpressung der Auslaufdüse 3 unter den verschiedensten Temperaturbedingungen gewährleistet ist.

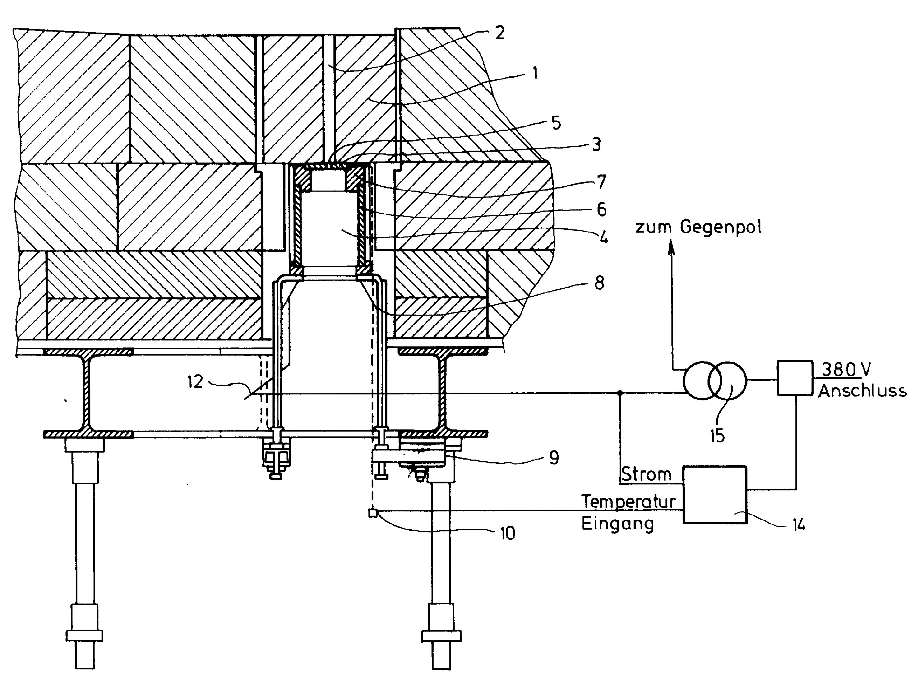

Die Auslaufdüse 3 ist durch ein Kabel elektrisch leitend mit einem Transformator 15 verbunden und bildet daher eine Elektrode. Die Gegenelektrode ist innerhalb des Glasbades angeordnet. Die entsprechende Leitung ist in der Zeichnung mit "zum Gegenpol" gekennzeichnet.

Bei genügender Temperatur erfolgt also die bereits genannte Stromleitung, die das Aufschmelzen des Glases in der Auslaufbohrung 2 und der Auslaufdüse 3 vornimmt.

An der Auslaufdüse 3 ist weiterhin ein Thermoelement angebracht, dessen Zuleitung zu einem Regler 14 mit 10 bezeichnet ist. In den Regler wird weiterhin die Menge der zugeführten elektrischen Energie eingegeben und dieser Regler wirkt auf den geregelten Transformator 15 derart ein, daß ein konstanter Ausfluß sichergestellt wird. Es kann sich dabei vorteilhaft um einen einfachen Ein-Aus-Regler handeln, der den Stromfluß ausschaltet, wenn eine gewisse Toleranztemperatur überschritten wird und bei Unterschreiten einer niedrigeren Toleranztemperatur wird der Regeltransformator 15 wieder eingeschaltet.

Zur Inbetriebnahme des Auslaufs wird eine nicht gezeigte Isolierung in den Auslaufraum 4 im Stützzylinder 6 und gegebenenfalls im Bereich der Halterung 8 angebracht, so daß die Temperatur an der Auslaufdüse 3 ansteigen kann. Die Isolierung kann dabei manuell anbringbare Glaswolle oder dergleichen sein.

Wenn die Temperatur an der Auslaufdüse 3 auf ca. 700°C gestiegen ist, die im Regler 14 abgelesen werden kann, so wird der Transformator 15 eingeschaltet und durch den bereits genannten Stromfluß durch den Auslaufstein 1 und das Glas in der Auslaufbohrung 2 erhöht sich dann die Temperatur soweit, daß das Glas innerhalb der Bohrung 2 und der Düse 3 aufschmilzt. Die Isolierung kann dabei bereits mit Einschalten des Stromes entfernt werden, so daß nach dem Aufschmelzen ein ungehinderter Ausfluß sichergestellt ist.

Um den Auslauf wieder zu schließen, wird der Strom abgeschaltet und das Glas erstarrt innerhalb der Auslaufbohrung 2 und der Auslaufdüse 3 und verschließt den Auslauf auch langfristig sicher.

Zur Wiederinbetriebnahme des Auslaufs wird der vorstehend beschriebene Vorgang der Anbringung der Isolation und des Einschaltens des Stromes wiederholt.

Der wesentliche Vorteil des erfindungsgemäßen Auslaufs besteht darin, daß er auch nach längeren Stillstandszeiten mit Sicherheit in Betrieb genommen werden kann, daß eine Regelung der auslaufenden Glasmenge ohne weiteres genau möglich ist und daß er Sicherheit gegen ungewolltes Auslaufen bietet.

**Patentansprüche**

1. Diskontinuierlich betreibbarer Bodenauslauf eines Glasschmelzofens, mit einem Auslaufstein (1) mit einer Auslaufbohrung (2), in welcher das Glas während des nicht in Funktion befindlichen Auslaufs eingefroren ist und den Auslauf abdichtet, wobei eine unterhalb der Auslaufbohrung (2) gegen den Auslaufstein (1) gepreßte Auslaufdüse (3) als Elektrode zu einer im Glasbad befindlichen Gegenelektrode geschaltet ist, dadurch gekennzeichnet, daß die Auslaufdüse (3) aus hoch hitzebeständigem und nicht oxidierendem Metall besteht und daß eine bewegliche Isolierung für den unterhalb der Auslaufdüse (3) befindlichen Auslaufraum (4) vorhanden ist.

2. Bodenauslauf nach Anspruch 1, dadurch gekennzeichnet, daß die Auslaufdüse (3) eine Platte mit einer Bohrung (5) ist, deren Durchmesser kleiner als der der Auslaufbohrung (2) ist, wobei die Bohrungen (2 und 5) eine gemeinsame Mittelachse aufweisen.

3. Bodenauslauf nach Anspruch 1 oder 2, dadurch gekennzeichnet, daß unterhalb der Auslaufdüse (3) ein aus Feuerfestmaterial bestehender Stützzylinder (6) angeordnet ist, der in einer Ausnehmung seines ebenfalls zylindrischen Jochs (7) die Auslaufdüse (3) hält, wobei die Mittelachsen der Teile (3, 6 und 7) zusammenfallen.

4. Bodenauslauf nach Anspruch 3, dadurch gekennzeichnet, daß sich das untere Ende des Stützzylinders (6) über eine Halterung (8) an der Ofenverankerung (9) abstützt.

5. Bodenauslaß nach einem der Ansprüche 1 bis 4, dadurch gekennzeichnet, daß an der Auslaufdüse (3) ein Thermoelement angebracht ist.

6. Bodenauslauf nach Anspruch 5, gekennzeichnet durch einen Regler zur Regelung des Stromflusses zwischen der Auslaufdüse (3) und der Gegenelektrode in Abhängigkeit von der Temperatur an der Auslaufdüse (3).

7. Verfahren zum Betreiben des Bodenauslasses nach einem der vorhergehenden Ansprüche, dadurch gekennzeichnet, daß zur Inbetriebnahme des Auslaufs eine Isolierung des Auslaufraumes (4) vorgenommen wird, nach Erreichen einer ausreichenden Temperatur an der Auslaufdüse (3) ein Stromfluß zwischen der Auslaufdüse (3) und der Gegenelektrode hergestellt und die Isolierung entfernt wird, wobei bei weiterer Aufheizung der Glasfluß einsetzt und zur Beendigung der Glasentnahme die Zuführung elektrischer Energie unterbrochen wird, wonach das Glas im Auslaufstein (1) wieder erstarrt.

8. Verfahren nach Anspruch 7, dadurch gekennzeichnet, daß der Glasstrom während des Betriebes des Auslaufs über eine Regelung der zugeführten elektrischen Energie in Abhängigkeit von der Temperatur an der Auslaufdüse (3) konstant gehalten wird.

## Claims

1. Discontuously operable bottom outlet for a glass melting furnace, with an outlet brick (1) with an outlet bore hole (2), in which the glass solidifies when the outlet is not functioning, thus sealing the outlet, whereby an outlet valve (3) mounted below the outlet bore hole (2) is pressed against the outlet brick (3) also serves as an electrode connected to a counter electrode mounted in the glass melt, characterized, in that the outlet valve (3) consists of highly heat-resistant and non-oxidable metal and that there is a moveable isolation for the outlet space (4) underneath the outlet valve (3).

2. Bottom outlet according to patent claim 1, characterized in that the outlet valve (3) is a plate with a bore hole (2), the diameter of which is smaller than that of the outlet bore hole (2), whereby the bore holes (2 and 5) display a common middle axis.

3. Bottom outlet according to claim 1 or 2, characterized in that below the outlet valve (3) is disposed a supporting cylinder made of a fire-resisting material, which supports the outlet valve in a hollow in the bridgepiece (7), which is also cylindrical, whereby the central axes of the parts (3, 6 and 7) coincide.

4. Bottom outlet according to claim 3, characterized in that the lower end of the supporting cylinder (6) is supported by means of a clamping fixture to the furnace supports.

5. Bottom outlet according to claims 1 to 4, characterized in that a thermocouple is attached to the outlet valve (3).

6. Bottom outlet according to claim 5, characterized in that a regulator for controlling the flow of electrical current between the outlet valve (3) and the counter electrode as a function of the temperature at the outlet valve (3).

7. Process for operating the bottom outlet according to one of the preceeding claims, characterized in that in putting the outlet into operation, the outlet space (4) is isolated, and, after reaching a sufficient temperature at the outlet valve (3), an electrical current is allowed to flow between the outlet valve (3) and the counter electrode, the isolation is removed, whereby by further heating the flow of glass commences and on completing the withdrawal of glass from the furnace, the electrical current is switched off, after which the glass in the outlet brick (1) again solidifies.

8. Process accordint to claim 7, characterized in that during the operation of the outlet the constancy of the flow of glass is regulated by means of a control of the electrical energy supplied as a function of the temperature at the outlet valve.

## Revendications

1. Ouvreau de fond capable de fonctionner de manière discontinue pour four de verrerie, avec une brique d'ouvreau (1) munie d'un trou d'ouvreau (2) dans lequel le verre se solidifie lorsque l'ouvreau n'est pas en service, et bouche ainsi l'ouvreau, une buse d'ouvreau (3) prenant appui sur la brique d'ouvreau (1) sous le trou d'ouvreau (2), et faisant fonction d'électrode pour coopérer avec une contre-électrode disposée dans le bain de verre, caractérisé en ce que la buse d'ouvreau (3) est formée d'un métal non-oxydable à haute résistance à la chaleur et en ce qu'il comprend une isolation mobile pour le compartiment d'ouvreau (4) se trouvant sous la buse d'ouvreau (3).

2. Ouvreau de fond selon la revendication 1, caractérisé en ce que la buse d'ouvreau (3) est une plaque munie d'un alésage (5) dont le diamètre est plus petit que le trou d'ouvreau (2), l'alésage (5) et le trou d'ouvreau (2) étant coaxiaux.

3. Ouvreau de fond selon les revendications 1 ou 2, caractérisé en ce qu'il comprend sous la buse d'ouvreau (3) un cylindre de support (6) formé d'un matériau réfractaire, qui maintient dans un creux de sa culasse (7) cylindrique la buse d'ouvreau (3), ces pièces (3, 6 et 7) étant coaxiales.

4. Ouvreau de fond selon la revendication 3, caractérisé en ce que l'extrémité inférieure du cylindre de support (6) s'appuie sur un support (8) disposé sur l'ancrage (9) du four.

5. Ouvreau de fond selon l'une des revendications 1 à 4, caractérisé en ce qu'il comporte un thermocouple sur la buse d'ouvreau (3).

6. Ouvreau de fond selon la revendication 5, caractérisé en ce qu'il comporte un moyen de réglage de l'intensité du courant entre la buse d'ouvreau (3) et la contre-électrode, en fonction de la température de cette buse d'ouvreau (3).

7. Procédé d'utilisation de l'ouvreau de fond selon l'une des revendications précédentes, caractérisé en ce que pour la mise en fonctionnement de l'ouvreau, une isolation du compartiment d'ouvreau (4) est mise en place, un courant électrique est établi entre la buse d'ouvreau (3) et la contre-électrode lorsqu'une température suffisante est atteinte au niveau de la buse d'ouvreau (3), après quoi l'isolation est enlevée, le flux de verre étant enclenché par un chauffage supplémentaire, cependant que pour arrêter le prélèvement de verre, on interrompt l'alimentation en courant électrique, suite à quoi le verre se solidifie de nouveau dans la brique de l'ouvreau (1).

8. Procédé selon la revendication 7, caractérisé en ce que le flux de verre au cours du fonctionnement de l'ouvreau est maintenu constant grâce à un réglage de l'alimentation en énergie électrique en fonction de la température au niveau de la buse d'ouvreau (3).

zum Gegenpol

380 V Anschluss

15

14

Strom

Temperatur Eingang

1 2 3 5 7 6 4 8 9 10 12